# EUROPÄISCHE PATENTSCHRIFT

(11) **EP 4 251 446 B1**
(45) Veröffentlichungstag und Bekanntmachung des Hinweises auf die Patenterteilung: **04.12.2024**
(21) Anmeldenummer: 21801422.3
(22) Anmeldetag: 25.10.2021
(51) Int. Cl.: B60H 1/00, B60H 1/32, F24F 13/20

(54) **KLIMAGERÄT**
AIR-CONDITIONING APPLIANCE
APPAREIL DE CLIMATISATION

(30) Priorität: 30.11.2020 DE 102020007289
(43) Veröffentlichungstag der Anmeldung: 04.10.2023
(73) Patentinhaber: Truma Gerätetechnik GmbH & Co. KG, 85640 Putzbrunn (DE)
(72) Erfinder: KLEIN, Michael, 85640 Putzbrunn (DE); MUSELMANN, Wolfgang, 85640 Putzbrunn (DE)
(74) Vertreter: Prinz & Partner mbB
(86) Internationale Anmeldenummer: PCT/EP2021/000132
(87) Internationale Veröffentlichungsnummer: WO 2022/111844

(56) Entgegenhaltungen:
- WO-A1-2008/040340
- JP-A- 2019 007 448
- US-B1- 6 260 373

## Beschreibung

Die vorliegende Erfindung betrifft ein Klimagerät zum Kühlen eines Raumes. In einer Variante handelt es sich um ein auf dem Dach eines Fahrzeugs (z. B. eines Wohnmobils oder eines Wohnwagens) zu befestigendes Klimagerät.

Das der Luftkühlung zugrundeliegende Prinzip der Kälteerzeugung mittels eines Kühlkreislaufs ist seit langem bekannt und beispielsweise in der WO 2007/042065 A1 beschrieben. Vorhanden sind in solchen Klimaanlagen zumeist zwei Gebläse und zwei Wärmetauscher: Ein Gebläse und ein zugeordneter Wärmetauscher gehören zum Verdampfer, in dem die Luft des zu kühlenden Raumes durch die Wechselwirkung mit dem Kältemittel abgekühlt wird. Ein weiteres Gebläse und ein zugeordneter Wärmetauscher gehören zum Verflüssiger, in welchem thermische Energie des Kältemittels auf die Umgebungsluft übertragen und somit abgeführt wird.

Es zeigt sich, dass die in den Klimageräten verwendeten Kompressoren (alternative Bezeichnung ist Verdichter) Geräusche verursachen können. Dabei sind die Kompressoren beispielsweise in Polyurethan-Formteilen (vgl. die WO 2007/042065 A1) gelagert. Die Geräusche sind zumeist darauf zurückzuführen, dass der Kompressor Kräfte erzeugt, die nach außen und insbesondere auf die Stellen der Verbindung des Kompressors mit dem Gehäuse übertragen werden.

Die der Erfindung zugrundeliegende Aufgabe besteht daher darin, ein Klimagerät vorzuschlagen, das geräuschreduziert ist.

Die Erfindung löst die Aufgabe durch ein Klimagerät gemäß Anspruch 1, wobei das Klimagerät ein Gehäuse, einen Kompressor und mindestens eine Befestigungsvorrichtung für den Kompressor im Gehäuse aufweist, wobei der Kompressor mindestens eine Lagerungskomponente aufweist, wobei die Lagerungskomponente und die Befestigungsvorrichtung derartig ausgestaltet und miteinander verbunden sind, dass der Kompressor auf einem Boden des Gehäuses befestigt ist, wobei die Befestigungsvorrichtung mindestens ein Verspannungselement, ein Führungselement und zwei Anschlagselemente aufweist, wobei das Führungselement in einer Aussparung des Bodens des Gehäuses angeordnet ist, wobei eine Länge des Führungselements kleiner als eine Höhe der Aussparung ist, wobei die Anschlagselemente jeweils einer Stirnseite des Verspannungselements zugeordnet sind, wobei ein axialer Abstand zwischen den Anschlagselementen in einem unmontierten Zustand veränderlich ist, und wobei ein axialer Abstand zwischen den Anschlagselementen in einem montierten Zustand fest ist.

Bei dem erfindungsgemäßen Klimagerät (eine alternative Bezeichnung ist beispielsweise Klimaanlage) befindet sich ein Kompressor in einem Gehäuse und wird durch eine Befestigungsvorrichtung am Boden des Gehäuses befestigt. Der Kompressor befindet sich dabei auf der Innenseite des Bodens und das Gehäuse liegt über die Außenseite des Bodens z. B. auf dem Dach eines Wohnwagens. Über die Befestigung gibt es eine mechanische Kopplung zwischen Kompressor und Gehäuse. Dies bewirkt, dass Vibrationen des Kompressors direkt auf das Gehäuse und insbesondere auf den Boden des Gehäuses übertragen werden. Die Lagerungskomponente des Kompressors ist dabei beispielsweise ein Fußbereich oder ein nach außen geführter Abschnitt des Kompressors. Der Kompressor ruht damit auch auf der Lagerungskomponente oder überträgt darauf zumindest Schwingungsenergie.

Die Befestigungsvorrichtung verfügt über ein Verspannungselement, ein Führungselement und zwei Anschlagselemente. In einer Ausgestaltung sind mehrere Befestigungsvorrichtungen vorhanden. Zu unterscheiden sind für die Komponenten der Befestigungsvorrichtung ein montierter und ein unmontierter Zustand. Der unmontierte Zustand lässt sich dabei auch als Zustand während der Montage oder vor dem montierten Zustand bezeichnen. Während der Montage werden die Komponenten mit dem Kompressor und dem Gehäuse so zusammengeführt, dass der Kompressor mit dem Boden des Gehäuses gekoppelt ist.. Das Führungselement ist in einer Aussparung des Bodens des Gehäuses angeordnet. Der Boden hat also eine Aussparung, z. B. ein durchgehendes Loch, in welchem das Führungselement (in einer Ausgestaltung eine Art von Hülse) steckt. In einer Ausgestaltung hat das Verspannungselement eine zylindrische Form, ist z. B. eine Art von Stift oder Schraube. Dabei ist die Länge des Führungselements kleiner als eine Höhe der Aussparung. Es besteht für das Führungselement somit ein Untermaß gegenüber der Aussparung, in welcher es steckt. Die zwei Anschlagselemente sind jeweils einer Stirnseite des Verspannungselements zugeordnet. Mit anderen Worten: Die Anschlagselemente sind oben und unten relativ zum Verspannungselement angeordnet und erlauben damit die Fixierung derjenigen Komponenten, die sich axial entlang des Verspannungselements befinden. Dabei ist ein axialer Abstand zwischen den Anschlagselementen in dem unmontierten Zustand veränderlich und in einem montierten Zustand fest. Der axiale Abstand zwischen den zwei Anschlagselementen wird somit beispielweise während der Montage verändert, um eine Fixierung zu erzeugen oder z. B. um einen Abstand zwischen Komponenten der Befestigungsvorrichtung einzustellen. Dabei handelt es sich in einer Ausgestaltung insbesondere um Komponenten, durch die das Verspannungselement während der Montage hindurchgeführt wird, die sich also anschließend radial um das Verspannungselement herum befinden.

Gemäß einer Ausgestaltung sind mehrere Befestigungsvorrichtungen vorhanden, die jeweils getrennt voneinander mit dem Boden des Gehäuses verbunden sind. Jede Befestigungsvorrichtung leitet somit einzeln und unabhängig von den anderen die Kräfte des Kompressors in den Boden ein. Damit werden die Vibrationen weiter verteilt und stärker reduziert.

Eine Ausgestaltung sieht vor, dass das Verspannungselement und das Führungselement derartig ausgestaltet und aufeinander abgestimmt sind, dass das Verspannungselement in einem unmontierten Zustand axial beweglich innerhalb des Führungselements angeordnet ist. Im unmontierten Zustand kann somit in dieser Ausgestaltung das Verspannungselement axial innerhalb des Führungselements bewegt werden. Dies ist beispielsweise alternativ zu einer Ausgestaltung, dass das Führungselement ein Teil des Verspannungselements, also z. B. integral damit ausgestaltet ist.

Eine Ausgestaltung besteht darin, dass die Befestigungsvorrichtung zwei Auflageringe aufweist, dass sich die zwei Auflageringe entlang des Verspannungselements auf unterschiedlichen Höhen befinden, dass sich das Führungselement axial entlang des Verspannungselements zwischen den zwei Auflageringen befindet, und dass im montierten Zustand die zwei Auflageringe im Kontakt mit dem Boden des Gehäuses und im Kontakt mit dem Führungselement stehen. In dieser Ausgestaltung sind zwei Auflageringe vorgesehen, die ähnlich wie die Anschlagselemente funktionieren und einen axialen Abstand definieren bzw. eine Kraft auf Komponenten ausüben. Das Führungselement ist zwischen den beiden Auflageringen angeordnet, wird also von diesen in axialer Richtung eingerahmt. Im montierten Zustand stehen die Auflageringe in Kontakt mit dem Boden des Gehäuses. Daher befindet sich ein Auflagering auf der Außenseite und ein Auflagering auf der Innenseite des Gehäuses. Dem äußeren Auflagering ist dabei ein Anschlagselement zugeordnet, das sich damit auch außerhalb des Gehäuses befindet. Das äußere Anschlagselement befindet sich dabei in einer Ausgestaltung axial vor bzw. weiter außen als der äußere Auflagering. Damit kommt in axialer Richtung (von außen nach innen) zuerst das Anschlagselement, dann ein separater Auflagering, dann das Führungselement und schließlich der andere Auflagering. Weiterhin befinden sich die Auflageringe in mechanischem Kontakt mit dem Führungselement. Da ein Untermaß des Führungselements gegenüber der Aussparung des Bodens, in welcher es sich befindet, besteht, wird eine Kraft auf den Boden in dem Bereich der Aussparung ausgeübt. In einer Ausgestaltung führt dies zu einer Verformung des Bodens in diesem Bereich.

Eine Ausgestaltung sieht vor, dass die Befestigungsvorrichtung mindestens eine Federeinheit aufweist, und dass die Federeinheit axial entlang des Verspannungselements zwischen dem Führungselement und der Lagerungskomponente angeordnet ist. Die Federeinheit befindet sich somit im Gehäuse und oberhalb des Bodens. Die Federeinheit ist beispielsweise eine Kombination aus elastischen Kunststoffkomponenten und einer metallischen Feder.

Eine Ausgestaltung besteht darin, dass die Federeinheit im montierten Zustand axial beweglich zwischen dem Führungselement und einem Anschlagselement angeordnet ist. Das hier betroffene Anschlagselement ist dabei dasjenige, welches der im Gehäuse befindlichen Stirnseite des Verspannungselements zugeordnet ist. In dieser Ausgestaltung verfügt die Federeinheit über Spiel in Bezug auf den axialen Abstand zwischen dem Führungselement und dem inneren Anschlagselement und damit auch gegenüber der Lagerungskomponente des Kompressors. Dem steht der feste Abstand zwischen den zwei Auflageringen und damit der Fixierung des Führungselements in der Aussparung im Boden des Gehäuses gegenüber.

Eine Ausgestaltung sieht vor, dass die Befestigungsvorrichtung ein Zusatzführungselement aufweist, dass das Verspannungselement im unmontierten Zustand axial beweglich innerhalb des Zusatzführungselements ist, und dass die Federeinheit das Zusatzführungselement entlang des Verspannungselements zumindest teilweise radial umgibt.

Eine Ausgestaltung besteht darin, dass das Führungselement und/oder das Zusatzführungselement zumindest teilweise hülsenartig ausgestaltet sind/ist. Durch den Innenraum der Hülsenform ist dabei das z. B. stiftförmige Verspannungselement geführt.

Eine Ausgestaltung sieht vor, dass ein Anschlagselement als Mutter ausgestaltet ist. Mit dieser Ausgestaltung geht vorzugsweise einher, dass das Verspannungselement im axialen Bereich des Anschlagselements über ein Außengewinde verfügt, das mit dem Innengewinde der Mutter korrespondiert.

Eine Ausgestaltung besteht darin, dass ein Anschlagselement als flanschartiger Endabschnitt des Verspannungselements ausgestaltet ist. In dieser Ausgestaltung ist das Anschlagselement eine breite Stirnfläche, wie sie beispielsweise bei Nägeln als Kopf gegeben ist.

Eine Ausgestaltung sieht vor, dass der Boden des Gehäuses zumindest im Bereich der Aussparung elastisch verformbar ist. Der Boden wirkt vorzugsweise schwingungsdämpfend.

Eine Ausgestaltung besteht darin, dass der Boden des Gehäuses zumindest im Bereich der Aussparung aus einem geschäumten Kunststoff besteht. Ein geschäumter Kunststoff ist beispielsweise EPP, bei dem es sich um expandiertes Polypropylen handelt.

Im Einzelnen gibt es eine Vielzahl von Möglichkeiten, die erfindungsgemäße Temperierungsvorrichtung auszugestalten und weiterzubilden. Dazu wird verwiesen auf die dem Patentanspruch 1 nachgeordneten Patentansprüche. Es zeigen:
Fig. 1 eine schematische Darstellung eines Klimageräts und
Fig. 2 einen Schnitt durch eine Ausgestaltung einer Klimaanlage.

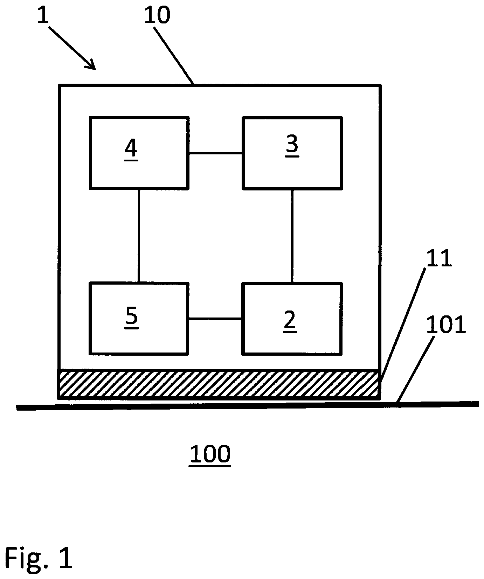

Die Fig. 1 zeigt schematisch den Aufbau einer Klimaanlage 1 zum Kühlen eines Raumes 100, der sich unterhalb eines Dachs 101 befindet. Der damit realisierte Kühlkreislauf oder Kälteprozess ist beispielsweise in der WO 2007/042065 A1 beschrieben. Bei dem Raum 100 handelt es sich beispielsweise um den Innenraum eines Wohnwagens oder eines Wohnmobils. Die Klimaanlage 1 ist somit für diesen Anwendungsfall auf dem Fahrzeugdach 101 des Wohnwagens bzw. des Wohnmobils befestigt.

Für den Kälteprozess verdichtet ein Kompressor (eine alternative Bezeichnung ist Verdichter) 2 ein gasförmiges Kältemittel, das sich dabei erwärmt und über eine Kältemittelleitung zu einem Verflüssiger (alternative Bezeichnung: Kondensator) 3 transportiert wird. Im Verflüssiger 3 wird die Wärme des Kältemittels an die Umgebungsluft (oder Außenluft) aus der Umgebung um den Raum 100 herum abgegeben. Die Außenluft wird dabei - durch ein entsprechendes Gebläse - angesaugt und nach der Wechselwirkung mit dem Kältemittel in einem Wärmetauscher wieder ausgeblasen. Daher kann diese Einheit 3 auch als Außenluft- oder Outdoor-Wärmeübertrager bezeichnet werden. Infolge der Abgabe der Wärme verflüssigt sich das verdichtete Kältemittel. Das flüssige und weiterhin unter hohem Druck stehende Kältemittel wird in einer Expansionseinrichtung 4, die z. B. als Drossel ausgestaltet ist, auf einen niedrigeren Druck entspannt. Dabei kühlt das Kältemittel ab.

Im nächsten Schritt gelangt das Kältemittel zu einem Verdampfer 5, durch den die zu kühlende Luft des Raums 100 geführt wird. Die Raum-Luft überträgt dabei ihre Wärme auf das Kältemittel, welches in den gasförmigen Zustand übergeht. Somit lässt sich die Komponente 5 auch als Innenluft- oder Indoor-Wärmeübertrager bezeichnen. Das gasförmige Kältemittel gelangt schließlich zurück zu dem Kompressor 2, sodass der Kühlkreislauf fortgeführt werden kann.

Der vorangehend beschriebene Kreislauf lässt sich auch umkehren, sodass die Vorrichtung 1 als Raumheizung dient. In diesem Fall fungiert der oben beschriebene Verflüssiger 3 als Verdampfer und dient umgekehrt der Verdampfer 5 als Verflüssiger.

Die Komponenten der Klimaanlage 1 befinden sich dabei in einem Gehäuse 10, das mit seinem Boden 11 auf dem Dach 101 aufliegt.

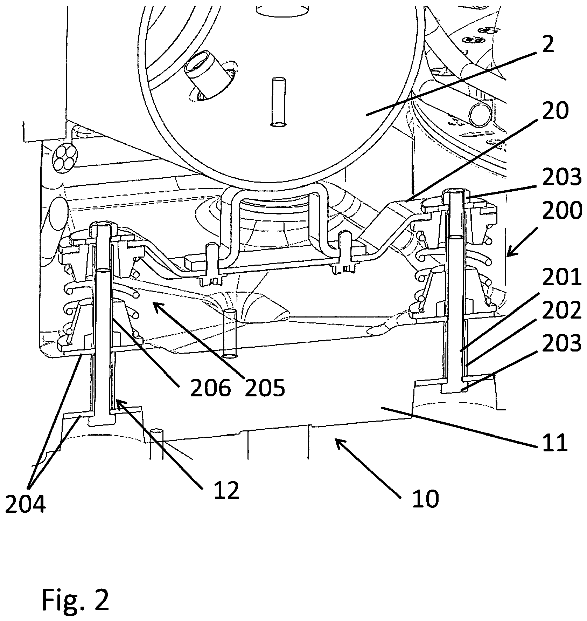

In der Fig. 2 ist eine Ausgestaltung gezeigt, in welcher der Kompressor 2 mit seiner Lagerungskomponente 20 über zwei Befestigungsvorrichtungen 200 auf dem Boden 11 des Gehäuses 10 im montierten Zustand befestigt ist. Die Lagerungskomponente 20 ist dabei eine Art von Metalllasche, auf der eine Seite des Kompressors 2 ruht. Auf der gegenüberliegenden - und hier nicht dargestellten - Seite des Kompressors 2 befindet sich dabei eine weitere Lagerungskomponente, die mit einer weiteren - hier nicht dargestellten - Befestigungsvorrichtung mit dem Boden 11 verbunden ist.

Die dargestellten Befestigungsvorrichtungen 200 sind hier identisch ausgeführt.

Zu erkennen ist, dass jeweils ein stift- oder schraubenförmiges Verspannungselement 201 von der Außenseite des Gehäusebodens 11 durch eine Aussparung 12 im Boden 11 bis zu der Lagerungskomponente 20 im Inneren des Gehäuses reicht. Dabei verfügt die Lagerungskomponente 20 über eine Aussparung, durch die das Verspannungselement 201 hindurchgeführt ist. Das Verspannungselement 201 ist von mehreren Komponenten umgeben. Die Komponenten sind durch die zwei stirnseitig angeordneten Anschlagselemente 203 fixiert. Die Anschlagselemente 203 sind zum einen ein integraler Kopf des Verspannungselement 201 und zum anderen eine Mutter im Inneren des Gehäuses 10.

Das hülsenförmige Führungselement 202 umgibt den unteren Abschnitt des Verspannungselements 201 und ist in der Aussparung 12 axial zwischen zwei Auflageringen 204 (alternative Bezeichnung wäre Unterlegring) fixiert, wobei ein äußerer Auflagering 204 sich zwischen dem äußeren Anschlagelement 203 und der Außenseite des Bodens 11 befindet. Das Führungselement 202 weist ein Untermaß gegenüber der Aussparung 12 auf, sodass durch die Auflageringe 204 auch eine Verspannung zwischen dem Führungselement 202 und dem Boden 11 erzeugt wird.

Axial in Richtung des Innenraums des Gehäuses 10 folgt auf das Führungselement 202 eine Federeinheit 205. Die Federeinheit 205 besteht aus zwei konisch zulaufenden Kunststoffkomponenten und einer dazwischen befindlichen Feder. Der Kompressor 2 liegt über die Lagerungskomponente 20 und gedämpft durch die Federeinheit 205 auf dem Boden 11 auf. Die Federeinheit 205 umgibt das Verspannungselement 201, welches unmittelbar von einem hülsenförmigen Zusatzführungselement 206 umgeben ist. Zwischen dem inneren Auflagering 204 auf der Innenseite des Bodens 11 und dem oberen als Mutter ausgeführten Anschlagselement 203 besteht dabei ein Spiel.

Insgesamt wird das Verspannungselement 201 somit entlang einer Längsachse von zwei hülsenförmigen Komponenten umgeben: Führungselement 202 und Zusatzführungselement 206.

### Bezugszeichenliste

- **1**: Klimagerät
- **2**: Kompressor
- **3**: Verflüssiger
- **4**: Expansionseinrichtung
- **5**: Verdampfer
- **10**: Gehäuse
- **11**: Boden des Gehäuses
- **12**: Aussparung des Bodens des Gehäuses
- **20**: Lagerungskomponente
- **100**: Raum
- **101**: Dach
- **200**: Befestigungsvorrichtung
- **201**: Verspannungselement
- **202**: Führungselement
- **203**: Anschlagselement
- **204**: Auflagering
- **205**: Federeinheit
- **206**: Zusatzführungselement

## Patentansprüche

1. Klimagerät (1),
wobei das Klimagerät (1) ein Gehäuse (10), einen Kompressor (2) und mindestens eine Befestigungsvorrichtung (200) für den Kompressor (2) im Gehäuse (10) aufweist,
wobei der Kompressor (2) mindestens eine Lagerungskomponente (20) aufweist, wobei die Lagerungskomponente (20) und die Befestigungsvorrichtung (200) derartig ausgestaltet und miteinander verbunden sind, dass der Kompressor (2) auf einem Boden (11) des Gehäuses (10) befestigt ist,
wobei die Befestigungsvorrichtung (200) mindestens ein Verspannungselement (201), ein Führungselement (202) und zwei Anschlagselemente (203) aufweist, wobei das Führungselement (202) in einer Aussparung (12) des Bodens (11) des Gehäuses (10) angeordnet ist,
wobei eine Länge des Führungselements (202) kleiner als eine Höhe der Aussparung (12) ist,
wobei die Anschlagselemente (203) jeweils einer Stirnseite des Verspannungselements (201) zugeordnet sind,
wobei ein axialer Abstand zwischen den Anschlagselementen (203) in einem unmontierten Zustand veränderlich ist, und
wobei ein axialer Abstand zwischen den Anschlagselementen (203) in einem montierten Zustand fest ist.

2. Klimagerät (1) nach Anspruch 1,
wobei das Verspannungselement (201) und das Führungselement (202) derartig ausgestaltet und aufeinander abgestimmt sind, dass das Verspannungselement (201) in dem unmontierten Zustand axial beweglich innerhalb des Führungselements (202) angeordnet ist.

3. Klimagerät (1) nach Anspruch 1 oder 2,
wobei die Befestigungsvorrichtung (200) zwei Auflageringe (204) aufweist, wobei sich die zwei Auflageringe (204) entlang des Verspannungselements (201) auf unterschiedlichen Höhen befinden,
wobei sich das Führungselement (202) axial entlang des Verspannungselements (201) zwischen den zwei Auflageringen (204) befindet, und
wobei im montierten Zustand die zwei Auflageringe (204) im Kontakt mit dem Boden (11) des Gehäuses (10) und in Kontakt mit dem Führungselement (202) stehen.

4. Klimagerät (1) nach einem der Ansprüche 1 bis 3,
wobei die Befestigungsvorrichtung (200) mindestens eine Federeinheit (205) aufweist, und
wobei die Federeinheit (205) axial entlang des Verspannungselements (201) zwischen dem Führungselement (202) und der Lagerungskomponente (20) angeordnet ist.

5. Klimagerät (1) nach Anspruch 4,
wobei die Federeinheit (205) im montierten Zustand axial beweglich zwischen dem Führungselement (202) und einem Anschlagselement (203) angeordnet ist.

6. Klimagerät (1) nach einem der Ansprüche 1 bis 5,
wobei die Befestigungsvorrichtung (200) ein Zusatzführungselement (206) aufweist, wobei das Verspannungselement (201) im unmontierten Zustand axial beweglich innerhalb des Zusatzführungselements (206) ist, und
wobei die Federeinheit (205) das Zusatzführungselement (206) entlang des Verspannungselements (201) zumindest teilweise radial umgibt.

7. Klimagerät (1) nach einem der Ansprüche 1 bis 6,
wobei das Führungselement (202) und/oder das Zusatzführungselement (206) zumindest teilweise hülsenartig ausgestaltet sind/ist.

8. Klimagerät (1) nach einem der Ansprüche 1 bis 7,
wobei ein Anschlagselement (203) als Mutter ausgestaltet ist.

9. Klimagerät (1) nach einem der Ansprüche 1 bis 8,
wobei ein Anschlagselement (203) als flanschartiger Endabschnitt des Verspannungselements (201) ausgestaltet ist.

10. Klimagerät (1) nach einem der Ansprüche 1 bis 9,
wobei der Boden (11) des Gehäuses (10) zumindest im Bereich der Aussparung (12) elastisch verformbar ist,
und/oder
wobei der Boden (11) des Gehäuses (10) zumindest im Bereich der Aussparung (12) aus einem geschäumten Kunststoff besteht.

## Claims

1. An air conditioner (1),
the air conditioner (1) having a housing (10), a compressor (2) and at least one fastening device (200) for the compressor (2) in the housing (10),
the compressor (2) having at least one mounting component (20),
the mounting component (20) and the fastening device (200) being configured and connected to each other such that the compressor (2) is fastened on a bottom (11) of the housing (10),
the fastening device (200) having at least one clamping element (201), a guiding element (202) and two stop elements (203),
the guiding element (202) being arranged in a recess (12) of the bottom (11) of the housing (10),
a length of the guiding element (202) being shorter than a height of the recess (12),
the stop elements (203) being each associated with a front side of the clamping element (201),
an axial distance between the stop elements (203) being variable in an unassembled state, and
an axial distance between the stop elements (203) being fixed in an assembled state.

2. The air conditioner (1) according to claim 1,
the clamping element (201) and the guiding element (202) being configured and adapted to each other such that the clamping element (201) is arranged so as to be axially movable within the guiding element (202) in the unassembled state.

3. The air conditioner (1) according to claim 1 or 2,
the fastening device (200) having two supporting rings (204),
the two supporting rings (204) being located at different levels along the clamping element (201),
the guiding element (202) being located axially along the clamping element (201) between the two supporting rings (204), and
the two supporting rings (204) being in contact with the bottom (11) of the housing (10) and in contact with the guiding element (202) in the assembled state.

4. The air conditioner (1) according to any of claims 1 to 3,
the fastening device (200) having at least one spring unit (205), and
the spring unit (205) being arranged axially along the clamping element (201) between the guiding element (202) and the mounting component (20).

5. The air conditioner (1) according to claim 4,
the spring unit (205) being arranged so as to be axially movable between the guiding element (202) and a stop element (203) in the assembled state.

6. The air conditioner (1) according to any of claims 1 to 5,
the fastening device (200) having an additional guiding element (206),
the clamping element (201) being axially movable within the additional guiding element (206) in the unassembled state, and
the spring unit (205) at least partially radially surrounding the additional guiding element (206) along the clamping element (201).

7. The air conditioner (1) according to any of claims 1 to 6,
the guiding element (202) and/or the additional guiding element (206) being configured to be at least partially sleeve-like.

8. The air conditioner (1) according to any of claims 1 to 7,
a stop element (203) being configured as a nut.

9. The air conditioner (1) according to any of claims 1 to 8,
a stop element (203) being configured as a flange-like end section of the clamping element (201).

10. The air conditioner (1) according to any of claims 1 to 9,
the bottom (11) of the housing (10) being elastically deformable at least in the area of the recess (12),
and/or
the bottom (11) of the housing (10) being made of a foamed plastic material at least in the area of the recess (12).

## Revendications

1. Appareil de climatisation (1),
l'appareil de climatisation (1) présentant un boîtier (10), un compresseur (2) et au moins un dispositif de fixation (200) pour le compresseur (2) dans le boîtier (10),
le compresseur (2) présentant au moins un composant de logement (20),
le composant de logement (20) et le dispositif de fixation (200) étant réalisés et reliés l'un à l'autre de sorte que le compresseur (2) est fixé sur un fond (11) du boîtier (10),
le dispositif de fixation (200) présentant au moins un élément de serrage (201), un élément de guidage (202) et deux éléments de butée (203),
l'élément de guidage (202) étant agencé dans un évidement (12) du fond (11) du boîtier (10),
une longueur de l'élément de guidage (202) étant inférieure à une hauteur de l'évidement (12),
les éléments de butée (203) étant chacun associés à une face frontale de l'élément de serrage (201),
un écart axial entre les éléments de butée (203) étant variable dans un état non-assemblé, et
un écart axial entre les éléments de butée (203) étant fixe dans un état assemblé.

2. Appareil de climatisation (1) selon la revendication 1,
l'élément de serrage (201) et l'élément de guidage (202) étant réalisés et adaptés l'un à l'autre de sorte que l'élément de serrage (201), à l'état non-assemblé, est agencé axialement déplaçable à l'intérieur de l'élément de guidage (202).

3. Appareil de climatisation (1) selon la revendication 1 ou 2,
le dispositif de fixation (200) présentant deux anneaux d'appui (204),
les deux anneaux d'appui (204) se trouvant à différentes hauteurs le long de l'élément de serrage (201),
l'élément de guidage (202) se trouvant entre les deux anneaux d'appui (204) axialement le long de l'élément de serrage (201), et
des deux anneaux d'appui (204) étant en contact avec le fond (11) du boîtier (10) et en contact avec l'élément de guidage (202) à l'état assemblé.

4. Appareil de climatisation (1) selon l'une des revendications 1 à 3,
le dispositif de fixation (200) présentant au moins une unité à ressort (205), et
l'unité à ressort (205) étant agencée entre l'élément de guidage (202) et le composant de logement (20) axialement le long de l'élément de serrage (201).

5. Appareil de climatisation (1) selon la revendication 4,
l'unité à ressort (205), à l'état assemblé, étant agencée axialement déplaçable entre l'élément de guidage (202) et un élément de butée (203).

6. Appareil de climatisation (1) selon l'une des revendications 1 à 5,
le dispositif de fixation (200) présentant un élément de guidage supplémentaire (206),
l'élément de serrage (201) étant axialement déplaçable à l'intérieur de l'élément de guidage supplémentaire (206) à l'état non-assemblé, et
l'unité à ressort (205) entourant l'élément de guidage supplémentaire (206) au moins partiellement dans le sens radial le long de l'élément de serrage (201).

7. Appareil de climatisation (1) selon l'une des revendications 1 à 6, l'élément de guidage (202) et/ou l'élément de guidage supplémentaire (206) étant au moins partiellement réalisé(s) sous forme de douille.

8. Appareil de climatisation (1) selon l'une des revendications 1 à 7,
un élément de butée (203) étant réalisé sous forme d'écrou.

9. Appareil de climatisation (1) selon l'une des revendications 1 à 8,
un élément de butée (203) étant réalisé sous forme de tronçon d'extrémité en forme de bride de l'élément de serrage (201).

10. Appareil de climatisation (1) selon l'une des revendications 1 à 9,
le fond (11) du boîtier (10) étant élastiquement déformable au moins dans la zone de l'évidement (12),
et/ou
le fond (11) du boîtier (10) étant réalisé en une matière plastique expansée au moins dans la zone de l'évidement (12).
